# EUROPEAN PATENT APPLICATION

(11) **EP 4 681 983 A1**
(43) Date of publication of application: **21.01.2026**
(21) Application number: 25187354.3
(22) Date of filing: 03.07.2025
(51) Int. Cl.: B60L 58/12, B60L 50/15, B60L 50/50, B60W 20/12, B60W 50/00

(54) **SYSTEMS, METHODS, AND SERVERS FOR EVOLVING ROUTE-BASED POWER MANAGEMENT**

(30) Priority: 16.07.2024 US 202418774539
(71) Applicant: Cummins Power Generation, Inc., Minneapolis MN 55432 (US)
(72) Inventor: George, Arul Antony, Columbus, 47201 (US)
(74) Representative: Cleveland Scott York

(57) **Abstract**

Power management is provided. A system for power management includes one or more processors. The processors are configured to detect, from a plurality of sensors (106) for a vehicle, sensor data indicative of an evolving route. The processors are configured to provide, to a remote server (204), the sensor data. The processors are configured to receive, from the remote server, a terrain map (124) indicative of a state of an evolving route. The processors are configured to predict, based on the terrain map, a future power demand for the vehicle (202). The processors are configured to apportion, based on the prediction, the power demand between a first power source (218) and a second power source (220). The processors are configured to generate control signals to modulate, according to the apportionment, a power output of at least one of the first power source or the second power source.

## Description

### BACKGROUND

The present disclosure relates generally to evolutional route-based power management. A collection of vehicles, such as off-road transporters, can traverse an evolving route. The operation of the vehicle can depend upon the evolution of the route.

### SUMMARY

An embodiment relates to a power management system. The power management system includes one or more processors to effect the operation thereof. The power management system is configured to detect, from a plurality of sensors for a vehicle, sensor data indicative of an evolutional route. The power management system is configured to provide, to a remote server, the sensor data. The power management system is configured to receive, from the remote server, a terrain map indicative of a state of an evolutional route. The power management system is configured to predict, based on the terrain map, a future power demand for the vehicle. The power management system is configured to apportion, based on the prediction, the power demand between a first power source and a second power source. The power management system is configured to generate control signals to modulate, according to the apportionment, a power output of at least one of the first power source or the second power source.

In some embodiments, the one or more processors are coupled with a transducer of various transducers to receive first sensor data from the transducer and with. In some embodiments, the one or more processors are coupled with a virtual sensor to receive second sensor data of the sensor data, the virtual sensor derived from a combination of two or more transducers of the plurality of transducers. In some embodiments, the evolutional route includes an off-road route comprising a loose surface, the terrain map comprising an indication of a condition of the loose surface. The one or more processors can generate the control signals further based on the indication of the condition.

In some embodiments, a vehicle-based portion of the power management system is configured to cause the vehicle to traverse a first portion of the evolutional route according to the modulated power output. The traversal can be subsequent to the receipt of the terrain map and prior to a receipt of an updated terrain map. The vehicle-based portion of the power management system can receive the updated terrain map indicative of a second state of the evolutional route. The vehicle-based portion of the power management system can predict, based on the updated terrain map, a second power demand for the vehicle. The vehicle-based portion of the power management system can apportion the second power demand between the first power source and the second power source. The vehicle-based portion of the power management system can adjust the control signals to modulate, according to the apportionment of the second power demand, a power output of at least one of the first power source or the second power source. The vehicle-based portion of the power management system can cause the vehicle to traverse a second portion of the evolutional route according to the adjusted control signals. In some embodiments, the state of the evolutional route and the second state of the evolutional route each respectively includes multiple locations corresponding to the vehicle and one or more second vehicles. The one or more processors are to determine the prediction of the power demand and the second power demand can be based on the multiple locations.

In some embodiments, the one or more processors are to determine the apportionment to satisfy an objective function. The objective function can include a first objective value for fuel cost of a fuel for the first power source. The objective function can include a second objective value for an emissions output associated with the fuel. In some embodiments, the one or more processors are to evaluate the objective function using third objective value for a power source condition, the power source condition relating to at least one of a health of a battery or a health of a combustion engine.

In some embodiments, the one or more processors are to determine the prediction of the future power demand for the vehicle is based on a vehicle type, a vehicle load, and a vehicle position along the evolutional route. In some embodiments, the one or more processors are to determine the apportionment to include an apportionment of a positive power output to one of the first power source or the second power source. In some embodiments, the one or more processors are to determine the apportionment to include a negative power output to the other of the first power source or the second power source.

An embodiment relates to a power management server including a controller coupled with memory. The controller is configured to receive, from a plurality of telematics interfaces corresponding to a plurality of vehicles, sensor data for vehicle operation associated with an evolutional route. The controller is configured to estimate, based on the sensor data, a state of the evolutional route. The controller is configured to generate, based on the state of the evolutional route, a terrain map configured for ingestion by a load prediction system of a vehicle of the plurality of vehicles. The controller is configured to transmit, to a telematics interface corresponding to the vehicle, the terrain map.

In some embodiments, the controller is configured to receive, from the vehicle, updated sensor data corresponding to vehicle operation along the evolutional route according to the terrain map. The controller can ingest the updated sensor data as target values of a loss function to generate a loss score. The controller can update, based on the loss score, a model used to predict the state of the evolutional route. The controller can generate an updated terrain map based on the updated model. In some embodiments, the controller can generate a terrain map to include a position and a speed for the vehicles.

In some embodiments, the controller is configured to determine the position of at least one vehicle based on sensor data for an operation of a power source of the vehicle. In some embodiments, the vehicles include multiple vehicle types, the types including a haul truck and at least one further vehicle type. The controller can discriminate between the vehicle types to generate the same terrain map. The controller can provide the same terrain map to each of the vehicle types.

In some embodiments, the controller is coupled with a transducer of a plurality of transducers to receive first sensor data of the sensor data and is coupled with a virtual sensor to receive second sensor data of the sensor data, the virtual sensor derived from a combination of two or more transducers. In some embodiments, the controller generates second sensor data based on multiple data elements of the sensor data.

An embodiment relates to a method of power management. The method includes locally receiving, at multiple telematics interfaces corresponding to a plurality of vehicles, sensor data indicative of an operation of each of the vehicles. The method includes transmitting the sensor data from each of the telematics interfaces to a remote server. The method includes generating, by the remote server, a terrain map based on the sensor data from the telematics interfaces corresponding to the vehicles. The method includes apportioning, by a vehicle of the plurality of vehicles, power between a first power source and a second power source based on the terrain map.

In some embodiments, the method includes embedding information, by the remote server, into the terrain map. The information can include first information indicative of a traveled surface of an evolving route and second information indicative of a position of the evolving route. The evolving route can include a time-variant component for at least one of the traveled surface or the position.

In some embodiments, apportioning the power includes predicting, based on the terrain map, a power demand at a future time. In some embodiments, apportioning the power includes generating control signals, based on the power demand and prior to the future time, to modulate a power output of at least one of the first power source or the second power source. In some embodiments, the control signals include a first control signal for a combustion engine based on a difference between a current exhaust temperature and a predicted exhaust temperature. In some embodiments, the control signals include a second control signal for an energy storage device to receive or transmit power.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

### BRIEF DESCRIPTION OF THE FIGURES

FIG. 1 is a block diagram of a data processing system, according to some embodiments.
FIG. 2 is a system diagram of a vehicle in communication with a server remote from the vehicle, according to some embodiments.
FIG. 3 is a network diagram of a fleet of vehicles in communication with a server, according to some embodiments.
FIG. 4 is a top view of an environment including an evolutional route, according to some embodiments.
FIG. 5 is a data flow diagram for a method of power management, according to some embodiments.
FIG. 6 is a flow diagram for a method of power management, according to some embodiments.
FIG. 7 is a block diagram illustrating an architecture for a computer system that can be employed to implement elements of the systems and methods described and illustrated herein.

### DETAILED DESCRIPTION

Following below are more detailed descriptions of various concepts related to, and implementations of, systems, servers, and methods related to power management. Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

Referring to the figures generally, the various embodiments disclosed herein relate to systems and devices of power management, and methods of their use. A traveled surface of a route (e.g., dirt or gravel roadway) can vary over time, such as to include mud, dry ground, gravel, obstacles, or so forth. Moreover, the location of the traveled surface may itself change over time, such as to avoid a deeply rutted portion, or to correspond to changes in a destination or origin. For example, a path of a mining truck can vary according to changes in a destination as a mining site progresses downward, or changes in environmental conditions. With respect to such dynamic conditions for route traversal, the route traversed by a vehicle can include an evolutional route, where the route can evolve responsive to environmental conditions, vehicle operation, usage, or other conditions.

Energy use management can improve vehicle operation while traversing a route based on predictions of vehicle loading. For example, a vehicle can modulate a mixture between a base fuel such as petroleum-based diesel and a substitute fuel such as methane or natural gas, can recharge and deploy battery power in an electrified-hybrid system, and/or can manage power according to any combination of energy sources. However, energy management for evolving routes can be challenging. For example, deployment of battery power at a particular location may be optimal for a first traversal of a route, but inappropriate at a same location in a subsequent traversal (e.g., where a hill climb portion is substituted for a continued descent). Accordingly, static energy management for an evolving route may increase overall fuel use, emissions, engine wear, or other avoidable parameters.

Any vehicles of a fleet traversing an evolving route can gather information relating to the condition of the evolving route. However, the vehicles can include varying loads, traction systems, and sensors, making it difficult to compare energy usage between vehicles. For example, some vehicles of a fleet can include or omit positional sensors, and can include different energy sources and traction systems. Some vehicles may include single-fuel vehicles, hybrid vehicles, tires, treads, or other variations such that energy use can vary widely between vehicles. According to the present disclosure, the various vehicles can gather data relevant to an evolving route, wherein a controller (e.g., of a remote server) can generate a terrain map according to the data generated by the sensor suites of the various vehicles. The controller can distribute the terrain map to the vehicles, whereupon the vehicles can deploy energy based on the terrain map to manage energy use. Such energy use can, for example, extend refueling, lower emissions of carbon or pollutants, maintain vehicle operation, and otherwise aid in the operation of one or more vehicles of a fleet.

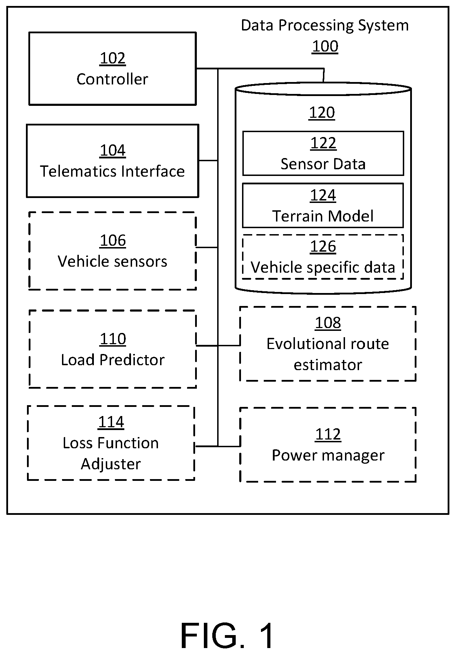

As shown in FIG. 1, a power management server includes a controller 102 coupled with memory. The controller 102 is configured to receive, from a plurality of telematics interfaces 104 corresponding to a plurality of vehicles, sensor data 122 for vehicle operation associated with an evolutional route. The controller 102 is configured to estimate, based on the sensor data, a state of the evolutional route. The controller 102 is configured to generate, based on the state of the evolutional route, a terrain map 124 configured for ingestion by a load prediction system of a vehicle of the plurality of vehicles. The controller 102 is configured to transmit, to a telematics interface 104 corresponding to the vehicle, the terrain map 124.

A power management server can be hosted by or remote from one or more vehicles. A system including the components of the power management server may be referred to as a data processing system 100. The data processing system 100 can include components of or interfacing with vehicle-based or other servers (e.g., remote servers). For example, the data processing system 100 can include the controller 102, including one or more processors of the remote server and one or more further processors (e.g., processors coupled with various vehicles). The processors of the controller can be in network communication with one another.

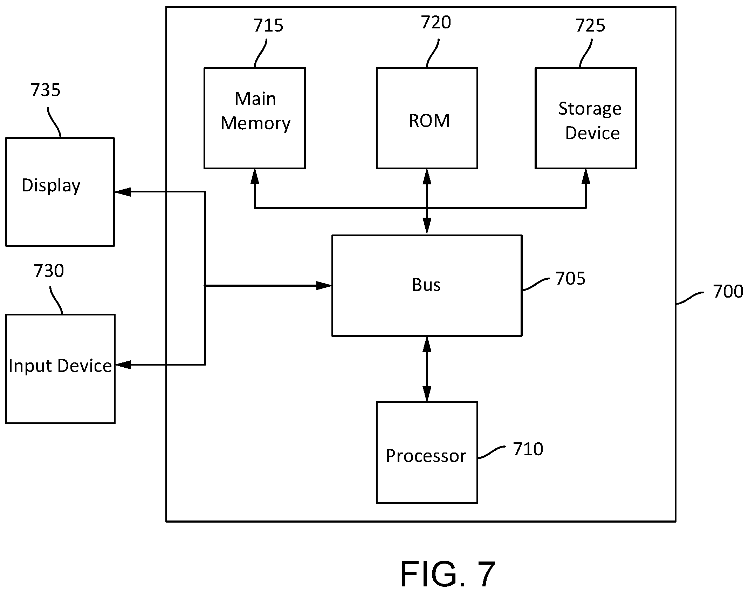

The controller 102, telematics interface 104, vehicle sensors 106, evolutional route estimator 108, load predictor 110, power manager 112, and loss function adjuster 114 can each include or interface with at least one processing unit or other logic device such as a programmable logic array engine, or module configured to communicate with a data repository 120 or database. The controller 102, telematics interface 104, vehicle sensors 106, evolutional route estimator 108, load predictor 110, power manager 112, and loss function adjuster 114 can be separate components, a single component, or part of one or more vehicle-based or other servers. The vehicles, servers, and various components thereof can include hardware elements, such as one or more processors, logic devices, or circuits. For example, the vehicles and servers can include one or more components or structures of functionality of computing devices depicted in FIG. 7.

The data repository 120 can include one or more local or distributed databases, and can include a database management system. The data repository 120 can include computer data storage or memory and can store one or more of sensor data 122 received from or otherwise determined according to data from the sensors 106, a terrain map 124, or vehicle specific data 126.

The sensor data 122 can refer to or include information derived from one or more transducers of a sensor (e.g., sensor-transducers); for example, the controller 102 can be coupled with one or more transducers and/or virtual sensors. For example, the sensor data 122 can include sensor data 122 (e.g., first sensor data) received from one of multiple transducers, such as wheel speed indication or positional data. The sensor data 122 can include sensor data 122 (e.g., second sensor data) from one or more virtual sensors, derived from a combination of two or more transducers. Sensor data 122, as received from a transducer, may be referred to as raw sensor data 122. Sensor data 122, generated via the application of transforms to raw sensor data 122, may be referred to as processed sensor data 122 (e.g., the data processing system 100 can generate second sensor data 122 based on multiple data elements of sensor data 122). Processed sensor data 122 originating from multiple transducers may be referred to as sourced from a virtual sensor. For example, an engine load virtual sensor can indicate an engine loading according to a combination of a throttle position sensor, turbo boost sensor and manifold pressure sensor. A surface deformability virtual sensor can indicate a condition of an evolutional surface based on a wheel speed sensor and a positional sensor such as an inertial management unit (IMU) or global navigational satellite system (GNSS) (e.g., the Global Positioning System (GPS) or GLONASS). Any of the virtual or other sensor data 122 can be received from an ECU of a vehicle, or via additional sensors 106. For example, sensor data 122 can be received from a sensor 106 used for other vehicle operation, or from a dedicated sensor for the energy management operations disclosed herein.

Sensor data 122 can include positional data such as a two- or three-dimensional location received from a positional sensor such as a GPS or other GNSS sensor, or other indication of a known location such as a Wi-Fi signal, Bluetooth beacon, or inertial data of an IMU. Some non-positional data can be used to determine a position of a vehicle (e.g., by the evolutional route estimator 108) as in the case of vehicles traversing a known path providing ECU signals indicative of a position along a route. For example, a vehicle ascending a hill can provide indications of lowered speeds and gearing along with higher engine loading or wheel slip. The ECU data can thus contain structure indicative of a position of the vehicle or a condition of the evolutional route. Such structure may be extracted according to an execution of a machine learning model of the evolutional route estimator 108 to determine aspects of a terrain map 124.

The terrain map 124 can refer to or include a data map including information related to an evolutional route. For example, the terrain map 124 can include an evolutional path of travel of an evolutional route. The path of travel can include physical coordinates of a path of travel along the evolutional route, any changes or rates of changes to the path of travel. The path of travel can include an origin, destination, waypoints, or other positions along a route. The terrain map 124 can include an indication of a state of a traveled surface. For example, an evolutional route can be an off-road route having differing surface properties according to usage, environmental conditions, or other time-variant properties. The terrain map 124 can include an indication of a frictional level, deformability, or other condition of a loose surface along a route. For example, the terrain map can include an indication of an energy usage for one or more portions of a route (e.g., a higher energy usage for a muddy portion or a lower energy usage for a dry hardpacked portion).

The vehicle specific data 126 can refer to or include particular attributes of a vehicle. For example, the vehicle specific data 126 can include an indication of a load carried by the vehicle, a battery state of health (SoH) or state of charge (SoC), a fuel level, a number of driven wheels, or a gross vehicle tonnage.

The vehicle specific data 126 can include aspects of one or more energy sources of a vehicle. A vehicle energy source can include a fuel consuming energy conversion device such as a combustion engine or a fuel cell. References to an energy source may refer to either of one of any number of fuels for the energy conversion devices, or the energy conversion device itself. For example, in a hybrid system including a dual-fuel engine and a hybrid-electric system, an energy source can refer to a first fuel and second fuel of the engine, or the engine and a battery of the hybrid-electric system. Energy sources can further include illustrative embodiments of a flywheel or electrified (e.g., battery or capacitive) energy storage system, a fuel cell, a compressed gas system, or an ammonia cracker (referring to either of thermal storage of energy or stored hydrogen or methane gas). Vehicle specific data 126 can include information associated with a fuel, such as a price, carbon intensity, or energy output. Accordingly, some chemically similar fuels such as petroleum-based diesel and biodiesel may be referred to as distinct energy sources.

The data processing system 100 can include or interface with at least one controller 102 to execute operations to manage the performance of the systems and methods described herein. The controller 102 can include one or more processors coupled with memory. The memory can include instructions or other components to perform various operations. One or more processors of the controller 102 can include dedicated circuits to perform some operation. In some embodiments, a portion of the instructions or circuits may be coupled with different processors of the controller 102. The instructions and circuits can include instructions to perform the various operations disclosed herein as performed by any of the servers, vehicles, or other aspects of the energy management systems provided herein. The controller 102 can cause one or more operations disclosed, such as by employing another element of the system 100. Operations disclosed by other elements of the system 100 can be initiated, scheduled, or otherwise controlled by the controller 102. For example, the operations of a power management system can be performed according to instructions accessible to the controller 102, as follows.

The power management system can detect, from multiple sensors for a vehicle, sensor data 122 indicative of an evolutional route. The power management system can provide, to a remote server, the sensor data 122. The power management system can receive, from the remote server, a terrain map 124 indicative of a state of an evolutional route. The power management system can predict, based on the terrain map 124, a future power demand for the vehicle. The power management system can apportion, based on the prediction, the power demand between a first power source and a second power source. The power management system can generate control signals to modulate, according to the apportionment, a power output of at least one of the first power source or the second power source.

The controller 102 can include or be coupled with communications electronics. The communications electronics can conduct wired and/or wireless communications. For example, the communications electronics can include one or more wired (e.g., Ethernet, Modbus, PCIe, AXI, or CAN (e.g., J1939)) or wireless transceivers (e.g., a Wi-Fi transceiver, a Bluetooth transceiver, an NFC transceiver, or a cellular transceiver). The communications electronics can couple the controller 102 to one or more elements of the system 100. For example, the controller 102 can receive various sensor data 122 associated with a vehicle via the communications electronics or convey various control signals to modulate the energy sources of the vehicles. The controller 102 can exchange information (e.g., commands or status information) with the telematics interface 104 via the communications electronics.

The data processing system 100 can include or interface with at least one telematics interface 104. The telematics interface can include any of various software component (e.g., a network stack) or hardware components (e.g., a transceiver). For example, the telematics interface 104 can include a software component coupled with a transceiver of a different subsystem or device, or include dedicated communication hardware. The telematics interface 104 can couple with a vehicle or remote server to aid in communication between the various components of the data processing system 100. For example, the telematics interface 104 can include instructions, executable code or circuits including or configured to interface with the communication electronics to effect communication between the vehicles and servers of a system (e.g., via a modem coupled with the telematics interface 104).

A telematics interface 104 of a vehicle can couple with one or more vehicle sensors 106 to receive sensor data 122 therefrom. For example, the telematics interface 104 can communicatively couple with an electronics control module (ECM) for a vehicle, to retrieve sensor data 122 related to engine operation or other energy deployment. The telematics interface 104 can receive sensor data 122 related to vehicle position. For example, the telematics interface 104 can receive information from a positional sensor such as a GNSS, Wi-Fi, or other transceiver configured to receive a signal indicative of a location. The telematics interface 104 can convey any of the sensor data to another telematics interface 104 remote from the vehicle (e.g., at another vehicle or a remote server).

A telematics interface 104 of a server can distribute, to one or more vehicles, a terrain map 124. For example, a telematics interface 104 of a remote server can generate the terrain map 124 based on sensor data 122 received from multiple vehicles of a vehicle fleet, and then distribute the terrain map 124 to the various vehicles of the fleet. The telematics interface 104 can distribute updates of the terrain map 124 to the vehicles in response to a receipt of updated sensors data. In this way, the vehicle fleet can receive updates according to the collective sensor data 122 provided to the server. In some embodiments, a telematics interface 104 can detect a condition indicative of a loss of communication with a server or other vehicle. For example, the telematics interface 104 can detect an absence of a reply or heartbeat, a received signal strength indication (RSSI), or other indicia of non-communication. The telematics interface 104 can communicate the loss of communication to other components of the data processing system 100, which may modulate an operating mode based thereupon. For example, the data processing system 100 can operate in an offline mode, or in a peer-mode with other vehicles in network communication.

The data processing system 100 can include or interface with at least one vehicle sensor 106. The vehicle sensors 106 can include physical or virtual sensors 106 configured to generate sensor data 122. The vehicle sensors 106 can be integral to or coupled with a vehicle, in some embodiments. For example, the vehicle sensors 106 can be coupled with an ECM, or can be implemented separate from an ECM, as in the example of a GPS module integral to the telematics interface 104 and separate from the ECM. In some embodiments, vehicle sensors 106 are disposed separately from a vehicle. For example, a vehicle presence sensor 106 can be disposed at a fuel or recharging point or otherwise along a route, to detect a presence, speed, or other attribute of a vehicle within a range of the sensor 106.

The data processing system 100 can include or interface with at least one evolutional route estimator 108. The evolutional route estimator 108 can receive sensor data 122 from various vehicles. The evolutional route estimator 108 can be disposed on a server that is remote from one or more of the vehicles (e.g., a remote server). In some embodiments, a vehicle can maintain a local instance of an evolutional route estimator 108. For example, the local instance can operate in an offline mode based on a model received from the server, or an a local (e.g., ad-hoc) network with vehicles in communication.

The evolutional route estimator 108 can receive sensor data 122 from various vehicles of a fleet in near real-time (e.g., with latency time according to a transmission by the telematics interface 104 or other data-in flight-processing delays), or with timestamps, such that the evolutional route estimator 108 can corelate sensor various data 122 with each other or a position along a route. For example, the evolutional route estimator 108 can receive positional information for a vehicle, such as GNSS location data, or an indication of presence at a predefined location. The evolutional route estimator 108 can receive operational information for the vehicle, such as indications of power output. For example, the evolutional route estimator 108 can receive an indication of engine loading, battery deployment, fuel substitution, or other indicia of vehicle operation.

The evolutional route estimator 108 can estimate aspects of an evolutional route based on the received sensors data. The evolutional route estimator 108 can embed the information into the terrain map 124, and distribute the terrain map 124 to various vehicles. For example, the evolutional route estimator 108 can provide an updated terrain map 124 at a periodic interval, upon determining an update to the terrain map 124, or based on a threshold change to the terrain map 124.

The evolutional route estimator 108 can corelate operational information with positional information. For example, the evolutional route estimator 108 can determine that a segment of a route (e.g., a downhill segment) is associated with braking, battery recharging, or high fuel substitution rates and that another segment (e.g., an uphill segment) is associated with high engine loading, high battery deployment, high exhaust temperature, and low fuel substitution rates. The evolutional route estimator 108 can generate the terrain map 124 based on sensor data received from or otherwise associated with multiple vehicles. For example, the evolutional route estimator 108 can receive positional data and operational data from a first vehicle, and operational data from a second vehicle. The evolutional route estimator 108 can corelate the operational data of the second vehicle with the operational data of the first vehicle, to determine a position along the route for the second vehicle. For example, the evolutional route estimator 108 can ingest a steering angle, engine loading, or other use of energy sources and determine a position of the vehicle along the evolutional route, and a state of the evolutional route, where sensor data 122 indicative of a right turn followed by a 100-meter climb at 12% grade is received from multiple vehicles.

In some embodiments, the evolutional route estimator 108 can receive vehicle specific data 126 for a vehicle, and determine the evolutional route based on the vehicle specific data 126. For example, where a fleet of vehicles includes multiple vehicle types including a haul truck and other vehicle types, the evolutional route estimator 108 can discriminate between the multiple of vehicle types to generate the same terrain map and provide the same terrain map to each of the vehicle types. The multiple vehicle types can include a haul truck and at least one further vehicle type. The evolutional route estimator 108 can determine a deformation or drag of a loose surface based on vehicle weight and power. In some embodiments, the evolutional route estimator 108 is not configured to receive vehicle specific data 126. A model operating locally at a vehicle, or on the server separate from the evolutional route estimator 108, can de-conflate vehicle specific attributes, such that the evolutional route estimator 108 can operate in a vehicle agnostic phase space.

The data processing system 100 can include or interface with at least one load predictor 110. For example, a load predictor 110 can be implemented at or by various vehicles. The load predictor 110 can predict a future load of the vehicle, based on the evolutional route. For example, the load predictor 110 can ingest a portion of an evolutional route and determine an energy use for a vehicle traversing the route. The prediction can be based on the evolutional route as provided in the terrain map 124, along with any vehicle specific data 126. The prediction of the future power demand for the vehicle can be based on a vehicle type, a vehicle load, and a vehicle position along the evolutional route.

The data processing system 100 can include or interface with at least one power manager 112. The power manager 112 can manage various power sources of a vehicle. For example, the power manager 112 can generate control signals to modulate power generated by various vehicle power sources. The power manager 112 can implement or determine an objective function associated with the operation of the vehicle to meet an energy, speed, emissions output or other demand. For example, the objective function can include a binding or soft constraint of a speed, emissions target, or fuel cost. The power manager 112 can determine one or more solutions (e.g., local minimums) to satisfy the objective function. References to optimal operation or solutions/satisfaction of the objective function refer to a local minimum. The local minimum may or may not be a global minimum. The provided objective function parameters are not intended to be limiting. For example, further terms can correspond to battery health or other equipment lifing or maintenance, a number of total or sequential hours an operator is present with the vehicle (e.g., labor intensity), or so forth.

The power manager 112 can operate over one or more predefined time periods, which may be referred to as look ahead windows. For example, the power manager 112 can determine a solution to the objective function based on a look ahead period of thirty seconds, five minutes, or so forth. In some embodiments the power manager 112 can operate based on a weighted average of one or more windows based on a confidence associated with the window. For example, a frequency changing cutback location may be associated with low confidence, while a static hill climb portion may be associated with higher confidence.

The data processing system 100 can include or interface with at least loss function adjuster 114. The loss function adjuster 114 can adjust various models based on a difference between predicted and realized performance. For example, the loss function adjuster 114 can provide updates to a model used by the evolutional route estimator 108, load predictor 110, and power manger 112. In some embodiments, a vehicle can maintain a local instance of a loss function adjuster 114. For example, the local instance can operate in an offline mode based on a model received from the server, or an a local (e.g., ad-hoc) network with vehicles in communication. A local instance of a model (e.g., the evolutional route estimator 108 or loss function adjuster 114) may operate with lower data resolution or less input data that a remote model coupled with additional vehicles. The data processing system 100 can switch between operation based on input revived from a remote model and a local model according to a communicative connection with a source of the remote model.

The loss function adjuster 114 can receive, from the vehicle, updated sensor data corresponding to vehicle operation along the evolutional route according to the terrain map 124. The loss function adjuster 114 can ingest the updated sensor data as target values of a loss function to generate a loss score. The loss function can operate based on a difference (referred to as a loss) between expected and realized data. The loss function adjuster 114 can update, based on the loss score, a model used to predict the state of the evolutional route. The loss function adjuster 114 can convey the updated model to evolutional route estimator 108 to cause the evolutional route estimator 108 to generate an update terrain map based on the updated model.

Referring partially, to the load predictor 110 by way of example, the loss function adjuster 114 can receive a load prediction and load data corresponding to the load prediction. The loss function adjuster 114 can determine a deviation between the prediction and the measured values corresponding to the prediction. The loss function adjuster 114 can use the measured values to retrain various machine learning models, and provide updates to the models. For example, the loss function adjuster 114 can be disposed on a server remote from the vehicles, and provide updated models for local execution at one or more vehicles. In some embodiments, a model is agnostic to a vehicles type. In some embodiments, a model is trained based on a vehicles type.

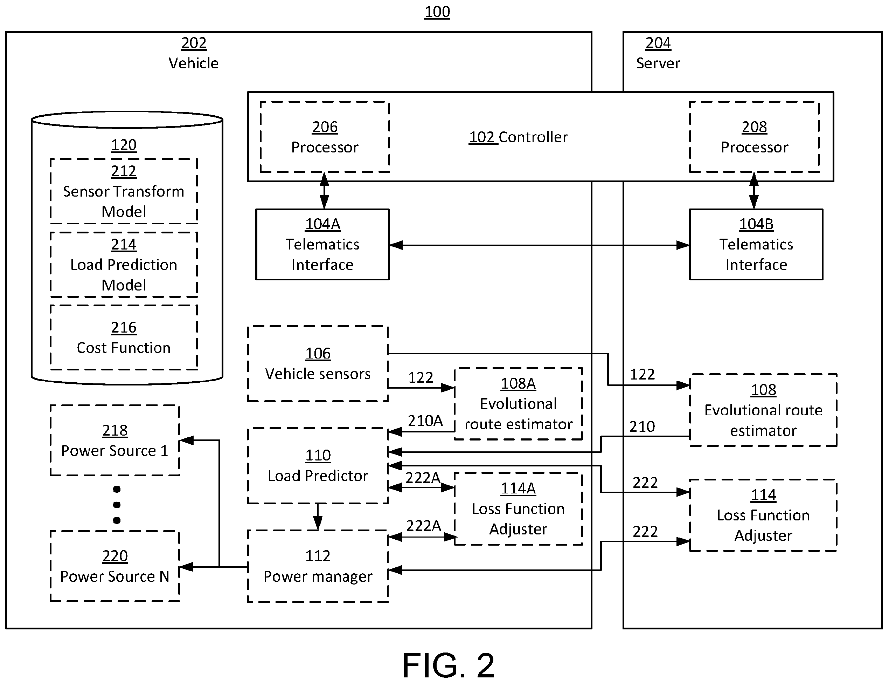

FIG. 2 depicts an example data processing system including a vehicle 202 having portions of a vehicle-based system and a server 204 remote from the vehicle 202. The vehicle 202 includes one or more first processors 206 and the server 204 includes one or more second processors 208 of the controller 102. Additional servers 204 or vehicles 202 can include additional processors, but are not depicted in the illustrative example embodiment of FIG. 2 for brevity of the disclosure. The vehicle 202 includes a first instance of a telematics interface 104A; the server 204 includes a second instance of the telematics interface 104B. The telematics interfaces 104 are communicatively coupled, such as via a direct communication, network communication, or other coupling. Information, such as sensor data 122 and terrain maps 210, shown as exchanged between a vehicle 202 and server 204 are passed via the telematics interfaces 104. Separate connections between components of the vehicle 202 and server 204 are provided in FIG. 2 to depict a logical connection between components, however, such data is passed over one or more links of the telematics interfaces 104.

The vehicle includes vehicle sensors 106 to determine positional, operational, or other sensor data 122 associated with the vehicle or an evolutional route traversed by the vehicle 202. The sensor data 122 generated by the vehicle sensors 106 may be used locally at the vehicles to control the vehicle. The vehicle sensors 106 provide sensor data 122 to an evolutional route estimator 108 on the server 204. The evolutional route estimator 108 generates a terrain map 210 based on the sensor data 122 (and any other sensor data 122, such as may be received from further vehicles 202). The evolutional route estimator 108 provides the terrain map 210 to a load predictor 110, whereby the load predictor 110 uses the terrain map 210 to predict a future load used by the vehicle 202. The evolutional route estimator 108 may provide the same terrain map 210 to various vehicles of one or more types which may predict the future load based on the terrain map 210 and vehicle specific data 126. The load predictor 110 provides the prediction to the power manager 112. For example, the load predictor 110 can provide a predicted power demand for a defined time period such as thirty seconds, one minute, or five minutes. The defined time period can correspond to an operation of a power source. For example, a small battery or supercapacitor bank can correspond to a look-ahead window of tens of seconds while an ammonia cracker, fuel cell, or large battery can correspond to a look-ahead window of several minutes. In some embodiments, the look-ahead window can depend on a confidence of a prediction or an impact to an objective function (e.g., where longer look-ahead windows do not positively impact a solution to the objective function by as threshold amount).

The power manager 112 is configured to apportion the predicted power demand between power sources 218, 220 of a vehicle 202. The apportionment can include an apportionment of a positive power output (e.g., sourcing power from a fuel cell, internal combustion engine, or battery). The apportionment can include an apportionment of a negative power output (e.g., engine braking of a combustion engine or storing power in a battery, ammonia cracker, or other energy source). The apportionment can apportion power between power sources. For example, the apportionment can apportion power from an internal combustion engine to battery storage, or between fuel sources of the internal combustion engine. The power manager 112 can modulate, based on the apportionment of the load predictor 110, control signals for various energy sources to satisfy an objective function. For example, the power manager 112 can modulate an operation of an engine, fuel cell, battery, flywheel, or other energy source. The modulation can include sourcing or sinking of power from power sources. For example, the modulation can cause a battery to charge or deploy energy, or a combustion engine to deploy energy or perform engine braking.

The vehicle 202 can host various models for local execution. The models can be implemented according to any of various architectures, or weighted ensembles thereof. For example, a data repository 120 local to the vehicle 202 can include a sensor transform model 212 to determine vehicle operational parameters (e.g., total power output, tractive effort, or positional information) based on sensor data 122. A data repository 120 local to the vehicle 202 can include a load prediction model 214 to predict a future power demand based on the terrain map 210 and vehicle specific data 126. A data repository 120 local to the vehicle 202 can include an objective function 216 satisfied according to parameters such as fuel cost, speed, emissions, engine wear, or other aspects of vehicle operation. An emissions output (e.g., a mass volume or flow of a gas or particulate matter) can be referred to as a value of the objective function or objective value.

The various models may be received by the vehicle 202 from the server 204. For example, the server may iterate models based on a difference between predicted and realized outcomes. Particularly, the loss function adjuster 114 can receive predicted and realized data 222 for each of the sensor transform model 212, the load prediction model 214, and the objective function 216, and provide updated instances of the sensor transform model 212, the load prediction model 214, and the objective function 216 to one or more vehicles of a fleet (e.g., to every vehicle 202 of the fleet).

In some embodiments, the vehicle 202 includes a local instance of an evolutional route estimator 108A or a local instance of a loss function adjuster 114A. The telematics interface 104A for the vehicle can retrieve a model to operate the local models from the server 204, and, upon a detection of loss or degradation of a communicative coupling with the server 204, operate based on a local model. Upon a re-establishment of the communicative coupling, the telematics interface 104A for the vehicle can pass stored data to the server 204, to aid the server in the generation of updated terrain maps 210 or models. That is, responsive to the detection of the condition of the communicative coupling, the sensor data 122 derived from vehicle sensors 106 can be passed to a local evolutional route estimator 108A. The local evolutional route estimator 108A can generate a local instance of the terrain map 210 for ingestion by the load predictor 110 and power manager 112, which may convey realized data 222A to the local instance of the loss function adjuster 114A.

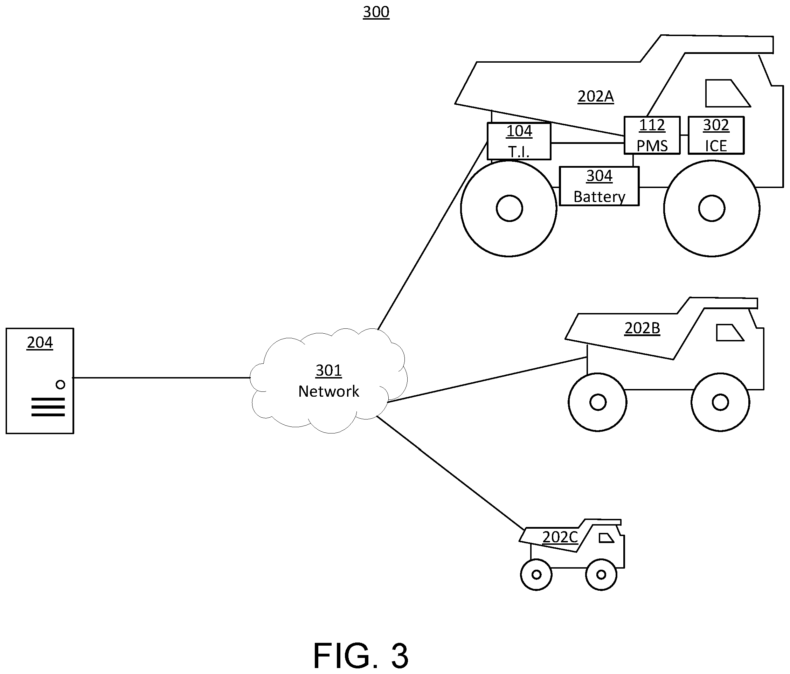

As shown in FIG. 3, a system 300 can include various vehicles such as a first vehicle 202A, a second vehicles 202B, and a third vehicle 202C (collectively, vehicles 202). The system 300 may be referred to as a fleet. The vehicles 202 are in network communication with a remote server 204. For example, the data processing system 100 can include or interface with network devices of a network 301 to exchange information between the vehicles 202 and any number of servers 204. For example, a telematics interface 104 of each of the vehicles 202 can interface with a telematics interface 104 of at least one server 204. The telematics interface 104 can include a hardware or software component configured to communicate with other telematics interfaces 104 via any network architecture such as a star or mesh topology. The network 301 can include computer networks such as Ethernet networks, controller area networks 301 (CAN), local interconnect networks 301 (LIN), Peripheral Component Interconnect Express (PCIe), the Internet, local, wide, metro, or other area networks 301, intranets, cellular networks 301, satellite networks 301, and other communication networks 301 such as Bluetooth, or data mobile telephone networks 301. The network 301 can be public or private. The various elements of the data processing system 100 can communicate over the network 301.

The vehicles 202 can be of one or more types. For example, the vehicles 202 can vary by gross weight, loading, drivetrain, or energy sources. At least one of the vehicles 202 can include multiple power sources, such as the combustion engine 302 and battery 304 of the first vehicle. Any of the vehicles 202 can include any combination of one or more fuel consuming or other energy sources, such as internal combustion engines, fuel cells, batteries, ammonia crackers, or so forth. The fuel consuming energy sources can be configured to operate with one or more fuels. For example, an internal combustion engine or fuel cell can operate with two or more fuels having different energy densities, carbon intensities, or other attributes. For example, a hydrogen fuel cell can operate with "blue" or "green" hydrogen which is associated with a different emissions profile, or a combustion engine can be configured to receive one or more chemically distinct fuels such as diesel fuel along with a substitution fuel such as hydrogen, methane, or natural gas, whereby a power management system 112 of the vehicle 202 can apportion energy between the energy sources, such as by substituting relatively high quantities of low cost or low-emission fuels during periods of low load and higher cost or higher emission fuels during periods of higher loads.

Each of the vehicles 202 can traverse an evolutional route extending between an origin and a destination (to include contemplation of a round-trip evolutional route wherein the origin and destination share a spatial location). Each of the vehicles 202 can include a sensor suite including, for example, position sensors, fuel level sensors, exhaust temperature sensors, wheel speed or groundspeed, sensors, cylinder compression sensors and so on. At least a portion of the sensors are coupled with an ECM, in some embodiments. The vehicles 202 may be configured to determine attributes of a traveled surface locally (e.g., incident to the operation of a traction control system or in a process performed for the provision of data to a remote server to aid in the systems and methods described herein).

In some embodiments, a server 204 remote from the vehicle 202 can receive raw or processed sensor data 122 from the vehicle 202 (e.g., the traction control information). The server 204 can generate a terrain map 124 based on the received data. For example, the server 204 can generate a terrain map 124 including a condition of a traveled surface of an evolutional route, and a position of the traveled surface, either of which may vary over time. In some embodiments, the terrain map 124 is vehicle agnostic, such as to include a deformability or slope of a route, whereby a load predictor 110 executed locally at each vehicle 202 is configured to predict a power demand based on vehicle specific data 126 (e.g., vehicle specific attributes locally stored or sensed at the vehicle). In some embodiments, the terrain map 124 includes information relevant to a particular type of vehicle. For example, the terrain map 124 can include an indication of energy expended or received by a loaded or unloaded vehicle 202 traversing the route, or based on a vehicle type, whereby a load predictor 110 at each vehicle 202 is configured to predict a load based on the received information.

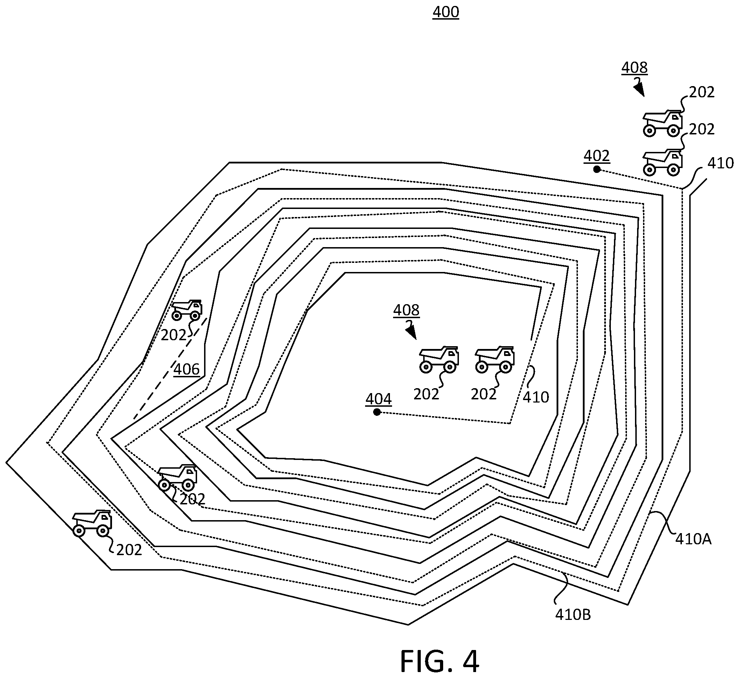

FIG. 4 provides a top view of an environment 400 including an evolutional route 410, according to some embodiments. The depicted environment includes a mining facility, although embodiments of the present disclosure are not limited to such a facility. The environment can include infrastructure facilities such as refueling or recharging points, along with any number of vehicles 202 or other objects of interest. One or more of the vehicles 202 can include vehicles of different typedness. For example, the vehicles 202 can include loaded or unloaded vehicles 202, a haul truck, water truck, trailer truck, dump truck, fuel truck, and so on. For example, the environment 400 can include a fleet of vehicles 202 in communication with a server 204 (e.g., the fleet of FIG. 3). The server 204 can update a terrain map 124 based on the various vehicles 202 of the fleet which may generate more frequent or more accurate instances of the terrain map 124 based upon information received from the fleet, relative to a lone vehicle 202 implementation.

The evolutional route 410 can extend from an origin location 402 at an upper portion of a mining facility, and a destination location 404 at a lower portion of the mining facility, inclusive of the origin location 402 and destination location 404. A traversed surface of the evolutional route 410 is depicted as a substantially helical route joining the upper portion and lower portion. Incident to material removal from the lower portion, the traversed surface can extend further downward, so that each subsequent traversal of the evolutional route 410 extends somewhat further. Moreover, the traveled surface of the evolutional route 410 can adapt over time, responsive to vehicular traffic, environmental conditions, resurfacing, grading, or other route reconstruction activities. Accordingly, a composition or position of the traveled surface can vary between traversals of the evolutional route 410 by various vehicles 202. The server 204 can generate updated instances of the terrain map 124 responsive to updated sensor data 122 received from the vehicles indicating a change of state.

A vehicle 202 can traverse a first portion 408A of the evolutional route 410 according to a first modulated output (e.g., based on a first terrain map 124). For example, the traversal of the first portion 408A can be subsequent to the receipt of the first terrain map 124 and prior to the receipt of an updated terrain map 124. A vehicle-based portion of the power management system 100 can cause the traversal of the vehicle 202. The vehicle 202 can receive an updated terrain map 124 indicating a second state of the evolutional route 410. The vehicle 202 can predict, based on the updated terrain map 124, a second power demand for the vehicle and apportion the second power demand between the first power source and the second power source. The vehicle 202 can adjust the control signals to modulate, according to the apportionment of the second power demand, a power output of at least one of the first power source or the second power source and cause the vehicle 202 to traverse a second portion 408B of the evolutional route 410 according to the adjusted control signals.

The state of the evolutional route 410 can include locations corresponding to multiple vehicles traversing the evolutional route 410, including the at least one vehicle 202 receiving the updated terrain map 124. In some embodiment, the prediction of power demand is based on the location of the various vehicles.

The power manager 112 can determine the apportionment to satisfy an objective function, the objective function including an objective value for fuel cost for a power source, emissions associated with the fuel, or a power source condition relating to a SoH of a battery or combustion engine.

Route traversal may depend on a position or speed of other vehicles 202 along the evolutional route 410, such as where a siding 406 may not be available for one vehicle 202 to overtake another, or where vehicles 202 are awaiting loading. The presence or speed of the various vehicles 202, as well as a condition or position of a traveled surface of the evolutional route 410 can be included in an evolutional route 410 (e.g., in the terrain map 124). Accordingly, the load predictor 110 can base a prediction on a congestion of an evolutional route 410. For example, where vehicles are queued for loading operations such as at the lower portion, the predicted load for a vehicle 202 approaching the queue 408 may be strongly associated with low fuel usage, since the speed of reaching the queue is may not impact a completion of a traversal of the evolutional route 410.

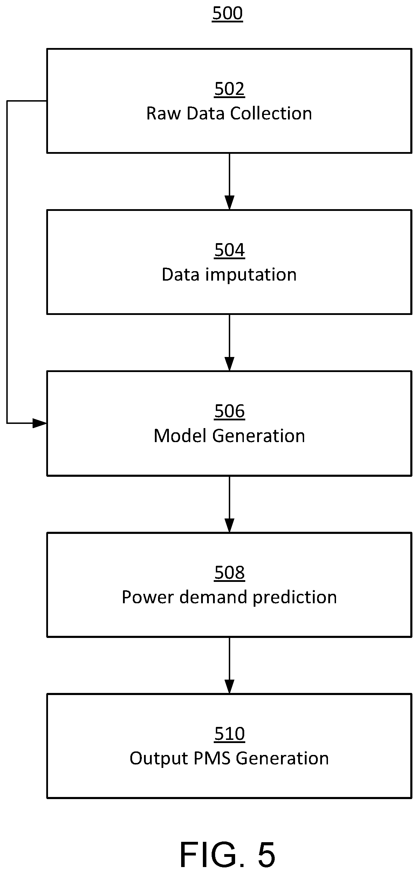

FIG. 5 provides a data flow diagram for a method 500 of power management, according to some embodiments. The method 500 can be performed by a data processing system 100 including components hosted by at least one of a vehicle 202 and a server 204 remote from the vehicle 202. For example, the method 500 can be performed with respect to multiple vehicles 202 of a same or varying type.

At operation 502, the method 500 includes collecting data from various sensor-transducers of a vehicle 202. For example, the data collection can include raw sensor data 122. Operation 502 may be conducted asynchronously by various vehicles 202 of a vehicle fleet. The execution of operation 502 may be referred to as a data collection layer.

At operation 504, the method 500 includes data imputation from various sensor-transducers of a vehicle 202. For example, a model can impute engine load or other data from raw sensor data 122 to generate processed sensor data 122 (e.g., virtual sensor data 122). The model can be disposed locally on any of the various vehicles 202 of a fleet or remote therefrom (e.g., on a server 204 remote from the vehicles 202). The model can include a look up table (LUT), discrete function, or machine learning model trained to determine an aspect of vehicle 202 operation such as engine load, position, or a state of a traveled surface based on sensor data 122. The execution of operation 504 may be referred to as a data preprocessing layer, and may include operations executed locally at each vehicle 202 of a fleet or at a server remote from one or more (e.g., all) of the vehicles 202.

At operation 506, the method 500 includes generating a terrain map 124 based on data collected at operation 502 or processed at operation 504. The terrain map 124 may be generated via one or more machine learning models. For example, separate models may be executed to generate different aspects of the terrain map 124, such as a position model, a traveled surface state model, a traffic condition model, and so forth. The execution of operation 504 may be performed at the server 204, remote from one or more of the vehicles 202.

At operation 508, the method 500 includes predicting power demand based at least on the terrain map 124. In some embodiments, operation 508 is executed locally at various vehicles 202 of a fleet, and may be further based on vehicle specific data 126 generated at or locally stored at the vehicles 202. The prediction can be made using one or more machine learning models. The machine learning models may be shared across various vehicles 202. One or more models may be trained or updated based on a loss function between predicted and realized data. For example, the predicted and realized data can be conveyed, from each of multiple vehicles 202, to a loss function adjuster 114 executed at a server 204 to update a common model and distribute the updated model to the various vehicles 202.

At operation 510, the method 500 includes outputting the predicted power demand to a power manager 112. The power manager 112 may refer to a local instance of a power management system (PMS) executed locally at each of the vehicles of a fleet. The power manager 112 may, in turn, provide control signals to various energy sources of a vehicle 202 based on the predicted demand. The execution of operation 510 may be performed locally at the various vehicles 202. The control signals may be generated according to an objective function or other model, which may be updated by a loss function adjuster 114 on a server.

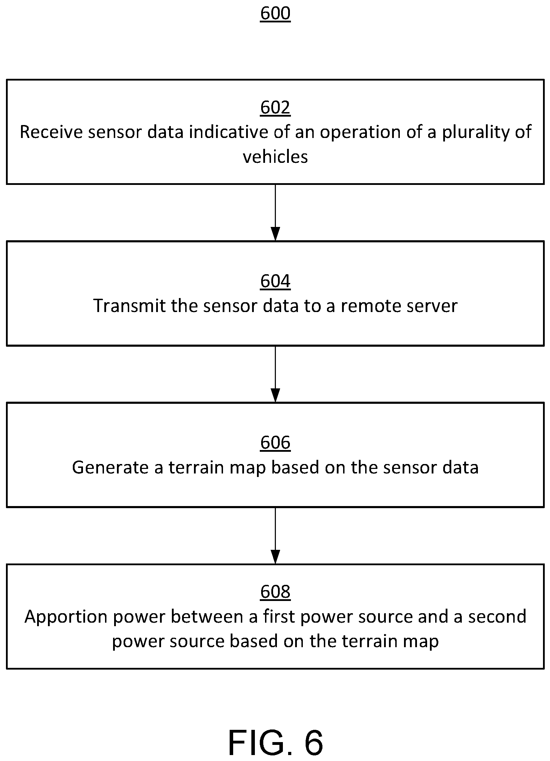

FIG. 6 provides a flow diagram for a method 600 of power management, according to some embodiments. The method 600 can be performed by a data processing system 100 including components hosted by at least one of a vehicle 202 and a server 204 remote from the vehicle 202. The method 600 can be performed by a remote server 204 according to an execution of the method 500 of FIG. 5 by a system including the remote server 204 and one or more vehicles 202. For example, the method 600 can be performed with respect to multiple vehicles 202 of a same or varying type. In brief summary, the method 600 includes, at operation 602, locally receiving, at telematics interfaces 104 corresponding to multiple vehicles 202, sensor data 122 indicative of an operation of each of the vehicles 202. At operation 604, the method 600 includes transmitting, the sensor data 122 from each of the telematics interfaces 104 to a remote server 204. At operation 606, the method 600 includes generating, by the remote server 204, a terrain map 124 based on the sensor data 122 from the telematics interfaces 104 corresponding to the vehicles 202. At operation 608, the method 600 includes apportioning, by at least one of the vehicles 202, power between a first power source 218 and a second power source 220 based on the terrain map 124.

Referring again to operation 602, the method includes receiving, at multiple telematics interfaces 104 corresponding to corresponding vehicles 202, sensor data 122 indicative of an operation of each of the vehicles 202. For example, the sensor data 122 can include raw sensor data 122 as received by a sensor-transducer, or processed sensor data 122, which may be derived from multiple sensor-transducers, or otherwise processed (e.g., smoothed or averaged).

Referring again to operation 604, the method 600 includes transmitting the sensor data 122 from each of the telematics interfaces 104 to a server 204. The vehicle 202 may be traversing an evolving route (also referred to as an evolutional route 410, without limiting effect). The server 204 is disposed remote from at least one of the vehicles 202. For example, the server 204 may be hosted locally at one of the vehicles 202 remote from the other vehicles 202, or at a remote data facility (e.g., back office or data center location). The (e.g., remote) server 204 can embed information into the terrain map 124. The information can include information indicative of a traveled surface of an evolving route (e.g., information related to a load of an engine compared to a distance traversed by a vehicle 202). The information can include information indicative of a position of the evolving route, such as GPS or other positional sensor of a vehicle 202, or operational data such as engine load data pattern matched to a pattern of operation of a vehicle 202 traversing the evolving route (e.g., the evolutional route estimator 108 can determine the position of at least one vehicle 202 based on sensor data for an operation of a power source of the vehicle 202, such as engine loading). The evolving route indicated by the terrain map can include a time-variant component for the traveled surface or the position along the evolving route. For example, the evolving route can adapt to change a distance or position of one or more segments of the evolving route, or the coefficient of friction, drag, traction, roughness, plasticity, bearing capacity, permeability, or other aspects of a traveled surface.

Referring again to operation 606, the method includes generating, by the server 204, a terrain map 124 based on the sensor data 122. For example, the terrain map 124 can include an indication of a position of an evolving route, a position and a speed for the vehicles 202 along the evolving route, or a state of the surface of the traveled surface along the evolving route. The evolving route indicated in an instance of the terrain map 210 can be determined based on a previous instance of a terrain map 210. The evolutional route estimator 108 can determine an updated terrain map 210 based on a change from a prior instance of the terrain map 124, via a maximum of minimum threshold for a change between maps.

Referring again to operation 608, the method 600 includes apportioning, by one of the vehicles 202, power between a first power source 218 and a second power source 220 based on the terrain map 210. The apportionment can be based on a predicted power demand at a future time (e.g., in one or more look-ahead windows). The predicted power demand can be based on the terrain map 124. For example, the predicted power demand can be based on a slope, distance, composition, or state of a traveled surface. The predicted power demand can be based on vehicle specific data 126 such as a load carried by the vehicle 202, a vehicle weight or other aspect of a vehicle type, or an energy source (e.g., an energy intensity or emissions associated with an energy source). The power manager 112 can generate control signals based on the power demand and prior to the future time, to modulate a power output of at least one of the first power source 218 or the second power source 220. For example, the power manager 112 can modulate a use of one of more fuels, a recharging of an energy storage device (e.g., battery, compressed gas system, flywheel, or chemical process such as a cracker to crack ammonia to generate hydrogen).

In some embodiments, the generation of the control signals includes generating a control signal for a combustion engine based on a difference between a current exhaust temperature and a predicted exhaust temperature. For example, the control signals can maintain an exhaust temperature associated with an efficiency band of an engine, or according to an emissions level associated with an exhaust temperature range (e.g., to affect the operation of an aftertreatment system). The provided illustrative example is not intended to limit the present disclosure; control signals can be generated based on manifold intake pressure, measures NOX emissions, or any other sensor data 122 available to the controller 102. For example, the current exhaust temperature can be substituted for other measured or otherwise derived sensor data 122 and the predicted exhaust temperature can be substituted for another prediction of future sensor data (e.g., according to the load predictor 108). In some embodiments, the generation of the control signals includes generating a control signal for an energy storage device to receive or transmit power. For example, the energy storage device can include an energy source of a battery, whereby the control signals can cause the battery to charge (e.g., based on regenerative braking or via operation of a fuel consuming energy source).

FIG. 7 is a block diagram illustrating an architecture for a computer system that can be employed to implement elements of the systems and methods described and illustrated herein. The computer system or computing device 700 can include or be used to implement a controller 102 or its components, and components of the vehicle 202. For example, instances of the computing device 700 can be implemented at any of various vehicles 202, or servers 204 remote therefrom. The computing system 700 includes at least one bus 705 or other communication component for communicating information and at least one processor 710 or processing circuit coupled to the bus 705 for processing information. The computing system 700 can also include one or more processors 710 or processing circuits coupled to the bus for processing information. The computing system 700 also includes at least one main memory 715, such as a random-access memory (RAM) or other dynamic storage device, coupled to the bus 705 for storing information, and instructions to be executed by the processor 710. The main memory 715 can be used for storing information during execution of instructions by the processor 710. The computing system 700 can further include at least one read only memory (ROM) 720 or other static storage device coupled to the bus 705 for storing static information and instructions for the processor 710. A storage device 725, such as a solid-state device, magnetic disk or optical disk, can be coupled to the bus 705 to persistently store information and instructions (e.g., for the data repository 120).

The computing system 700 can be coupled via the bus 705 to a display 735, such as a liquid crystal display, or active-matrix display. An input device 730, such as a keyboard or mouse can be coupled to the bus 705 for communicating information and commands to the processor 710. The input device 730 can include a touch screen display 735.

The processes, systems and methods described herein can be implemented by the computing system 700 in response to the processor 710 executing an arrangement of instructions contained in main memory 715. Such instructions can be read into main memory 715 from another computer-readable medium, such as the storage device 725. Execution of the arrangement of instructions contained in main memory 715 causes the computing system 700 to perform the illustrative processes described herein. One or more processors in a multiprocessing arrangement can also be employed to execute the instructions contained in main memory 715. Hard-wired circuitry can be used in place of or in combination with software instructions together with the systems and methods described herein. Systems and methods described herein are not limited to any specific combination of hardware circuitry and software.

Although an example computing system has been described in FIG. 7, the subject matter including the operations described in this specification can be implemented in other types of digital electronic circuitry, or in computer software, firmware, or hardware, including the structures disclosed in this specification and their structural equivalents, or in combinations of one or more of them.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining can be stationary (e.g., permanent or fixed) or moveable (e.g., removable or releasable). Such joining can be achieved with the two members coupled directly to each other, with the two members coupled with each other using one or more separate intervening members, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling can be mechanical, electrical, or fluidic. For example, circuit A communicably "coupled" to circuit B can signify that the circuit A communicates directly with circuit B (i.e., no intermediary) or communicates indirectly with circuit B (e.g., through one or more intermediaries).

References herein to the positions of elements (e.g., "top," "bottom," "above," "below") are merely used to describe the orientation of various elements in the FIGURES. It should be noted that the orientation of various elements can differ according to other exemplary embodiments, and that such variations are intended to be encompassed by the present disclosure. The term "or," as used herein, is used in its inclusive sense (and not in its exclusive sense) so that when used to connect a list of elements, the term "or" means one, some, or all of the elements in the list.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the systems and methods as shown in the various exemplary embodiments is illustrative only. Additionally, any element disclosed in one embodiment may be incorporated or utilized with any other embodiment disclosed herein. Although only one example of an element from one embodiment that can be incorporated or utilized in another embodiment has been described above, it should be appreciated that other elements of the various embodiments may be incorporated or utilized with any of the other embodiments disclosed herein.

## Claims

1. A system for power management, the system comprising:
one or more processors configured to:
detect, from a plurality of sensors (106) for a vehicle, sensor data indicative of an evolutional route;
provide, to a remote server (204), the sensor data;
receive, from the remote server, a terrain map (124) indicative of a state of the evolutional route;
predict, based on the terrain map, a future power demand for the vehicle (202);
apportion, based on the prediction, the power demand between a first power source (218) and a second power source (220); and
generate control signals to modulate, according to the apportionment, a power output of at least one of the first power source or the second power source.

2. The power management system of claim 1, wherein the one or more processors are coupled with:
a transducer of a plurality of transducers to receive first sensor data from the transducer; and
a virtual sensor to receive second sensor data of the sensor data, the virtual sensor derived from a combination of two or more transducers of the plurality of transducers.

3. The power management system of claim 1 or 2, wherein the evolutional route comprises an off-road route comprising a loose surface, the terrain map comprising an indication of a condition of the loose surface, and the one or more processors are configured to generate the control signals further based on the indication of the condition.

4. The power management system of any of the preceding claims, wherein a vehicle-based portion of the power management system is configured to:
cause the vehicle to traverse, subsequent to the receipt of the terrain map and prior to a receipt of an updated terrain map, a first portion of the evolutional route according to the modulated power output;
receive the updated terrain map indicative of a second state of the evolutional route;
predict, based on the updated terrain map, a second power demand for the vehicle;
apportion the second power demand between the first power source and the second power source;
adjust the control signals to modulate, according to the apportionment of the second power demand, a power output of at least one of the first power source or the second power source; and
cause the vehicle to traverse a second portion of the evolutional route according to the adjusted control signals.

5. The power management system of claim 4, wherein:
the state of the evolutional route and the second state of the evolutional route each respectively comprise a plurality of locations corresponding to:
the vehicle; and
one or more second vehicles; and
the one or more processors are to determine the prediction of the power demand and the second power demand based on the plurality of locations.

6. The power management system of any of the preceding claims, wherein the one or more processors are to determine the apportionment to satisfy an objective function, the objective function comprising:
a first objective value for fuel cost of a fuel for the first power source; and
a second objective value for an emissions output associated with the fuel,
and optionally wherein the one or more processors are to evaluate the objective function using a third objective value for a power source condition, the power source condition relating to at least one of a health of a battery or a health of a combustion engine.

7. The power management system of any of the preceding claims, wherein one or more processors are to determine the prediction of the future power demand for the vehicle based on:
a vehicle type;
a vehicle load; and/or
a vehicle position along the evolutional route.

8. The power management system of any of the preceding claims, wherein the one or more processors are to determine the apportionment to include:
an apportionment of a positive power output to one of the first power source or the second power source; and
an apportionment of a negative power output to the other of the first power source or the second power source.

9. A vehicle power management server, comprising:
a controller (102) coupled with memory, the controller to:
receive, from a plurality of telematics interfaces corresponding to a plurality of vehicles, sensor data for vehicle operation associated with an evolutional route;
estimate, based on the sensor data, a state of the evolutional route;
generate, based on the state of the evolutional route, a terrain map configured for ingestion by a load prediction system of a vehicle of the plurality of vehicles; and
transmit, to a telematics interface corresponding to the vehicle, the terrain map.

10. The vehicle power management server of claim 9, wherein the controller is to:
receive, from the vehicle, updated sensor data corresponding to vehicle operation along the evolutional route according to the terrain map;
ingest the updated sensor data as target values of a loss function to generate a loss score;
update, based on the loss score, a model used to predict the state of the evolutional route; and
generate an updated terrain map based on the updated model.

11. The vehicle power management server of claim 9 or 10, further comprising of at least one of the following features:
the controller is to generate the terrain map to include a position and a speed for the plurality of vehicles;
the controller is to determine the position of at least one of the plurality of vehicles based on sensor data for an operation of a power source of the vehicle;
the plurality of vehicles include a plurality of vehicle types, the types comprising a haul truck and at least one further vehicle type, and wherein the controller is to discriminate between the plurality of vehicle types to generate same terrain map, and to provide the same terrain map to each of the vehicle types;
the controller is coupled with a transducer of a plurality of transducers to receive first sensor data of the sensor data, and is coupled with a virtual sensor to receive second sensor data of the sensor data, the virtual sensor derived from a combination of two or more transducers of the plurality of transducers; and/or
the controller is to generate second sensor data based on a plurality of data elements of the sensor data.

12. A method of power management, the method comprising:
locally receiving, at a plurality of telematics interfaces corresponding to a plurality of vehicles, sensor data indicative of an operation of each of the plurality of vehicles;
transmitting the sensor data from each of the plurality of telematics interfaces to a remote server;
generating, by the remote server, a terrain map based on the sensor data from the plurality of the telematics interfaces corresponding to the plurality of vehicles; and
apportioning, by a vehicle of the plurality of vehicles, power between a first power source and a second power source based on the terrain map.

13. The method of claim 12, comprising:
embedding, by the remote server, into the terrain map:
first information indicative of a traveled surface of an evolving route; and
second information indicative of a position of the evolving route, wherein
the evolving route includes a time-variant component for at least one of:
the traveled surface or the position.

14. The method of claim 12 or 13, wherein apportioning the power comprises:
predicting, based on the terrain map, a power demand at a future time; and
generating control signals, based on the power demand and prior to the future time, to modulate a power output of at least one of the first power source or the second power source.

15. The method of claim 14, wherein generating the control signals comprises:
generating a first control signal for a combustion engine based on a difference between the sensor data and a predicted change to the sensor data; and
generating a second control signal for an energy storage device to receive or transmit power.
